# DEMANDE DE BREVET EUROPEEN

(11) **EP 1 872 654 A1**
(43) Date de publication de la demande: **02.01.2008**
(21) Numéro de dépôt: 07012693.3
(22) Date de dépôt: 28.06.2007
(51) Int. Cl.: A01K 61/00

(54) **Machine à retourner les poches à huîtres**

(30) Priorité: 28.06.2006 FR 0605824
(71) Demandeur: MCH S.A.R.L., 50500 Saint Come Du Mont (FR)
(72) Inventeur: Hardy, Jean-Louis, 50500 Saint Come Du Mont (FR)
(74) Mandataire: Maillet, Alain

(57) **Abrégé**

La présente invention se rapporte à une machine (100) destinée à retourner des poches (P) à huîtres préalablement posées sur une table (T) d'élevage, la machine (100) comprenant un train roulant (300) apte à faire circuler la machine (100) sur la table (T).

Selon l'invention, la machine (100) est pourvue d'un ascenseur (400) et d'un dispositif de retournement (500), l'ascenseur (400) étant adapté pour soulever les poches (P) de la table (T) pendant l'avancement de la machine (100) pour les transporter une à une dans le dispositif de retournement (500), le dispositif de retournement (500) étant mobile entre une position de réception d'une poche (P) et une position de déversement de la poche (P) sur la table (T), dans une position retournée, à l'arrière de la machine (100).

La machine peut alors retourner automatiquement et sans intervention humaine les poches préalablement posées sur une table d'élevage.

## Description

La présente invention concerne une machine destinée à retourner des poches à huîtres posées sur une table d'élevage.

Pour leur élevage, on place généralement les huîtres dans des poches à huîtres que l'on dépose sur des tables d'élevage placées sur le fond marin. Les huîtres peuvent ainsi se nourrirent des nutriments portés dans la mer.

Pour placer et retirer les poches à huîtres sur les tables d'élevage, celles-ci sont placées sur un fond marin qui est susceptible d'être découvert au moins à certaines marées basses.

Par ailleurs, les poches doivent être retournées régulièrement pour favoriser une croissance homogène des huîtres. Ce travail est réalisé depuis toujours à la main. Ce travail est particulièrement pénible du fait qu'il faille intervenir sur le fond marin et porter des gants de protection.

Le but de l'invention est donc de proposer une machine qui puisse retourner des poches à huîtres préalablement placées sur une table d'élevage et sans intervention humaine autre que celle nécessaire à sa mise en place.

A cet effet, est proposée une machine destinée à retourner des poches à huîtres préalablement posées sur une table d'élevage, la machine comprenant un train roulant apte à faire circuler la machine sur la table. Selon l'invention, la machine est pourvue d'un ascenseur et d'un dispositif de retournement, l'ascenseur étant adapté pour soulever les poches de la table pendant l'avancement de la machine pour les transporter une à une dans le dispositif de retournement, le dispositif de retournement étant mobile entre une position de réception d'une poche et une position de déversement de la poche sur la table, dans une position retournée, et à l'arrière de la machine.

La machine peut alors retourner automatiquement les poches préalablement posées sur une table d'élevage sans intervention humaine.

Selon une caractéristique additionnelle de l'invention, l'ascenseur comprend des rampes mobiles suivant un mouvement de type oscillant rotatif et dans lequel l'inclinaison de chaque rampe demeure constante.

Les poches peuvent alors être hissées pendant la phase montante des rampes.

Selon une caractéristique additionnelle de l'invention, chaque rampe est constituée d'un profilé de section en "U" dont les branches libres sont pourvues de crantages.

Selon une caractéristique additionnelle de l'invention, la machine comprend une paire de flasques, les deux extrémités de chaque rampe étant fixées respectivement sur deux paliers, un excentrique tourillonnant à l'intérieur de chaque palier, chaque excentrique étant monté sur un arbre rotatif tenu entre les deux flasques.

Selon une caractéristique additionnelle de l'invention, les excentriques de deux rampes voisines sont décalés d'un angle d'une valeur égale à 180° par rapport à l'axe de l'arbre rotatif.

Les rampes peuvent alors alternativement hisser les poches pour les acheminer en direction du dispositif de retournement.

Selon une caractéristique additionnelle de l'invention, le mouvement de rotation des deux arbres est synchronisé par l'intermédiaire d'une transmission.

Cette transmission est avantageusement une transmission positive de type à pignons et courroie crantés.

Selon une caractéristique additionnelle de l'invention, le train roulant se compose d'un premier rouleau, d'un second rouleau autour desquels est montée une chenille apte à rouler sur la table.

Selon une caractéristique additionnelle de l'invention, les deux rouleaux sont respectivement montés sur des arbres rotatifs dont les extrémités sont tenues entre les deux flasques.

Selon une caractéristique additionnelle de l'invention, un arbre rotatif d'entraînement d'un rouleau du train roulant ainsi qu'un arbre rotatif d'entraînement des rampes de l'ascenseur sont reliés à un système d'entraînement.

Selon une caractéristique additionnelle de l'invention, le système d'entraînement comprend un moteur ainsi qu'une pluralité d'arbres intermédiaires susceptibles de transmettre la puissance du moteur à l'arbre rotatif d'entraînement dudit rouleau ainsi qu'à l'arbre rotatif d'entraînement des rampes.

L'utilisation d'un seul moteur permet simultanément de faire avancer la machine sur la table et de faire fonctionner l'ascenseur.

Selon une caractéristique additionnelle de l'invention, la transmission de puissance entre le moteur et les différents arbres intermédiaires ainsi qu'entre ces arbres intermédiaires et les arbres d'entrainement est mise en oeuvre par des transmissions positives de type à poulies et courroie crantées.

Selon une caractéristique additionnelle de l'invention, le moteur est de type hydraulique susceptible d'être alimenté par la pompe hydraulique d'un engin se déplaçant à côté de la machine.

Selon une caractéristique additionnelle de l'invention, le dispositif de retournement est constitué d'un berceau monté de manière articulée, par l'intermédiaire d'une articulation tenue entre les deux flasques.

Selon une caractéristique additionnelle de l'invention, le berceau est constitué d'une pluralité de tubes pliés présentant une forme en "U", les branches libres des tubes situées d'un même côté sont fixées, au niveau de leur partie inférieure, à l'articulation.

Lorsqu'une poche provenant de l'ascenseur tombe dans le berceau, celui-ci bascule automatiquement sous l'effet de la masse de ladite poche pour la déverser sur la table, à l'arrière de la machine.

Selon une caractéristique additionnelle de l'invention, la machine est pourvue d'un moyen de levage pour en permettre sa manutention.

On peut utiliser pour cela un tracteur agricole ou un chargeur télescopique sur lequel est attelée une fourche hydraulique.

Selon une caractéristique additionnelle de l'invention, le moyen de levage est constitué de deux manchons montés sur un cadre fixé sur les flasques, lés manchons étant aptes à pouvoir réceptionner des doigts d'un dispositif de manutention.

Selon une caractéristique additionnelle de l'invention, la machine est pourvue d'un moyen de guidage positionné en vis-à-vis de l'ascenseur pour guider chaque poche pendant son transfert sur ledit ascenseur.

Selon une caractéristique additionnelle de l'invention, le moyen de guidage est constitué d'une pluralité de glissières associées parallèlement les unes par rapport aux autres en étant disposées au-dessus des rampes et parallèlement à celles-ci, les glissières étant montées sur une traverse reliant les manchons par l'intermédiaire d'une liaison de type à parallélogramme déformable apte à écarter plus ou moins les glissières des rampes afin que lesdites glissières puissent appuyer sur les poches pendant leur transfert sur lesdites rampes.

Selon une caractéristique additionnelle de l'invention, la machine est pourvue d'un tendeur adapté à modifier l'effort appliqué par les glissières sur les poches.

Selon une caractéristique additionnelle de l'invention, la machine coopère avec une table, la table se compose de piètements réunis par deux longerons extérieurs et éventuellement d'au moins un longeron intérieur, la largeur de la chenille étant adaptée pour prendre appui sur au moins deux longerons voisins de la table.

Selon une caractéristique additionnelle de l'invention, des palettes de soulèvement des poches sont fixées entre les flasques en étant placées dans le prolongement des parties basses des rampes afin de pouvoir être positionnées entre les longerons. Les palettes peuvent ainsi passer sous une poche pour la soulever si bien qu'elle peut être entrainée par les rampes pendant l'avancement de la machine.

Selon une caractéristique additionnelle de l'invention, la chenille est pourvue de bourrelets disposés longitudinalement sur sa paroi extérieure de manière à pouvoir être guidés par au moins deux longerons voisins de la table.

Les caractéristiques de l'invention, mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue en perspective d'une machine à retourner les poches à huîtres posées sur une table d'élevage selon l'invention,
la Fig. 2 représente une vue en perspective d'une table d'élevage destinée à supporter des poches à huîtres susceptibles d'être retournées par la machine selon l'invention,
la Fig. 3 représente une vue latérale en coupe d'une machine à retourner les poches à huîtres posées sur une table d'élevage selon l'invention,
la Fig. 4 représente une vue latérale d'un détail d'une machine à retourner les poches à huîtres posées sur une table d'élevage et dont le dispositif de retournement est montré dans une position de réception selon l'invention,
la Fig. 5 représente une vue latérale d'un détail d'une machine à retourner les poches à huîtres posées sur une table d'élevage et dont le dispositif de retournement est montré dans une position de déversement selon l'invention,
la Fig. 6 représente une vue en perspective d'une machine à retourner les poches à huîtres, dépourvue de son ascenseur et de son dispositif de retournement selon l'invention,
la Fig. 7 représente une vue rapprochée en perspective d'une machine à retourner les poches à huîtres selon l'invention,
la Fig. 8 représente une vue latérale d'un ascenseur monté sur un flasque d'une machine à retourner les poches à huîtres selon l'invention et,
la Fig. 9 représente une vue d'un détail agrandi d'un ascenseur monté sur un flasque d'une machine à retourner les poches à huîtres selon l'invention.

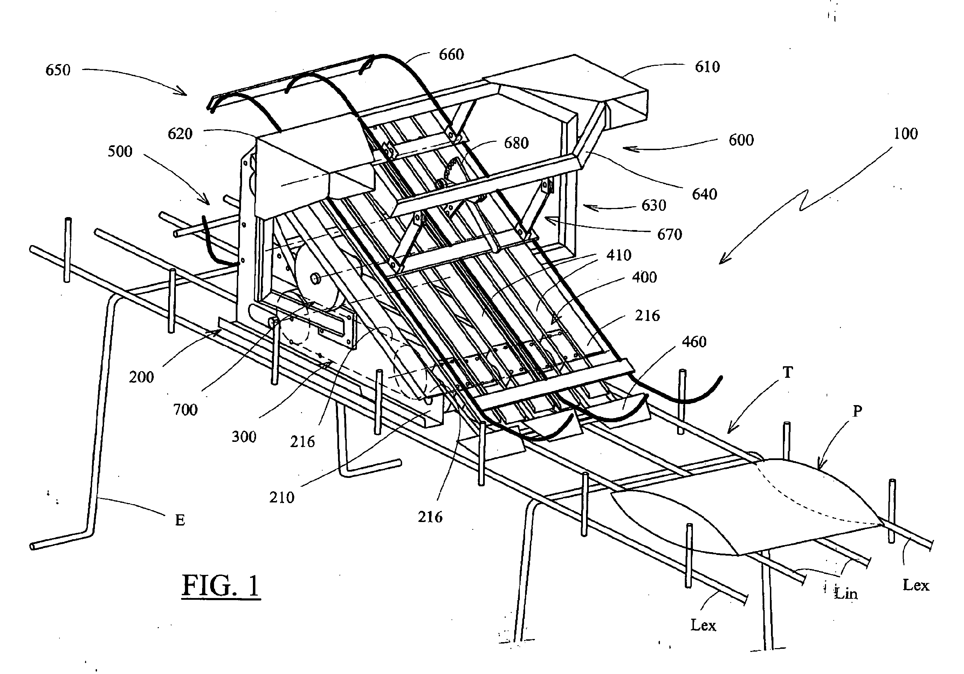

La machine 100 présentée sur la Fig. 1 est destinée à retourner des poches à huîtres préalablement déposées sur une table d'élevage T. Son utilisation à plusieurs reprises au cours du cycle d'élevage des huîtres permet de réaliser un travail pénible habituellement effectué manuellement par des ouvriers.

En effet, pendant la phase de croissance des huîtres qui dure entre dix-huit et trente mois, l'ostréiculteur doit retourner régulièrement et fréquemment à marée basse les poches à huîtres, c'est-à-dire près d'une vingtaine de fois afin de conduire harmonieusement leur développement.

La machine 100 se compose, à la Fig. 1, d'un châssis 200 sur lequel sont montés un train roulant 300 d'entraînement susceptible de permettre son déplacement sur une table d'élevage T, un ascenseur 400 conçu pour soulever des poches P posées sur la table T pendant l'avancement de la machine sur celle-ci, un dispositif de retournement 500 adapté à repositionner à l'arrière de la machine et en la retournant, chaque poche à l'endroit où elle a été prélevée, un moyen de levage 600 destiné à permettre sa pose et son retrait sur une table ou pour la déplacer, par exemple, sur une remorque de transport. La machine 100 comprend également un système d'entraînement 700 du train roulant 300 et de l'ascenseur 400.

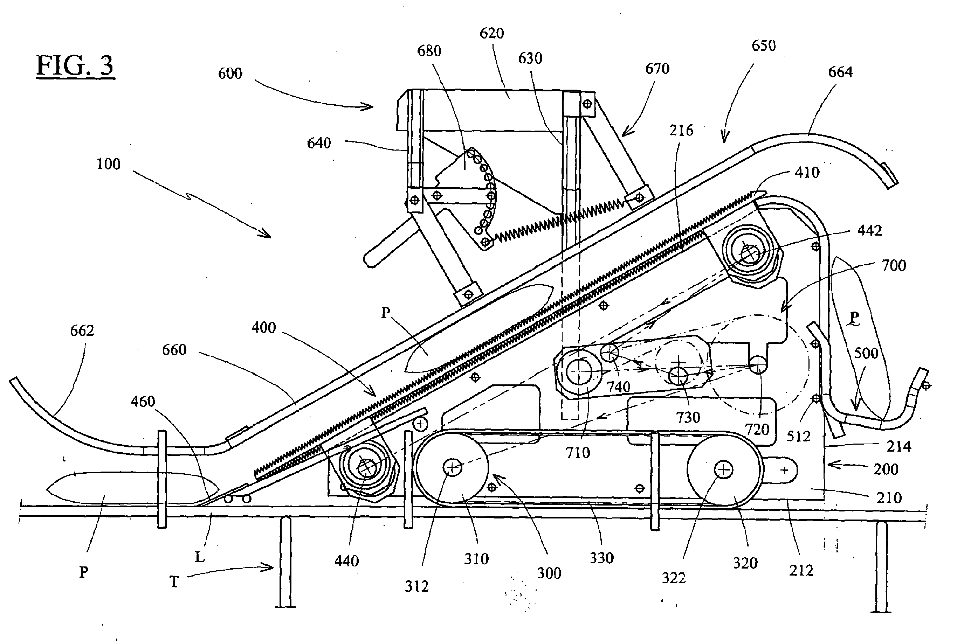

A la Fig. 3, le châssis 200 comprend deux flasques 210 disposés parallèlement l'un par rapport à l'autre présentant globalement la forme d'un triangle rectangle et dont un seul exemplaire est visible sur cette vue de latérale en coupe. Chaque flasque 210 comprend ainsi un bord horizontal 212 destiné à être tourné vers la table T dans la position de fonctionnement de la machine 100, un bord arrière 214 vertical et un bord incliné 216 reliant les deux autres bords 212 et 214.

A la Fig. 3, le train roulant 300 se compose d'un premier rouleau 310, d'un second rouleau 320 autour desquels est montée une chenille 330 destinée à rouler sur une table T d'élevage pour permettre le déplacement de la machine 100 sur ladite table. Les deux rouleaux 310 et 320 sont respectivement montés sur des arbres rotatifs 312 et 322 dont les extrémités sont tenues par l'intermédiaire de boîtes à roulement fixées sur les deux flasques 210 du châssis 200.

Le train roulant 300 est monté entre ces deux flasques 210 de telle manière qu'un brin de la chenille 330 puisse faire saillie sous les bords horizontaux 212 desdits flasques.

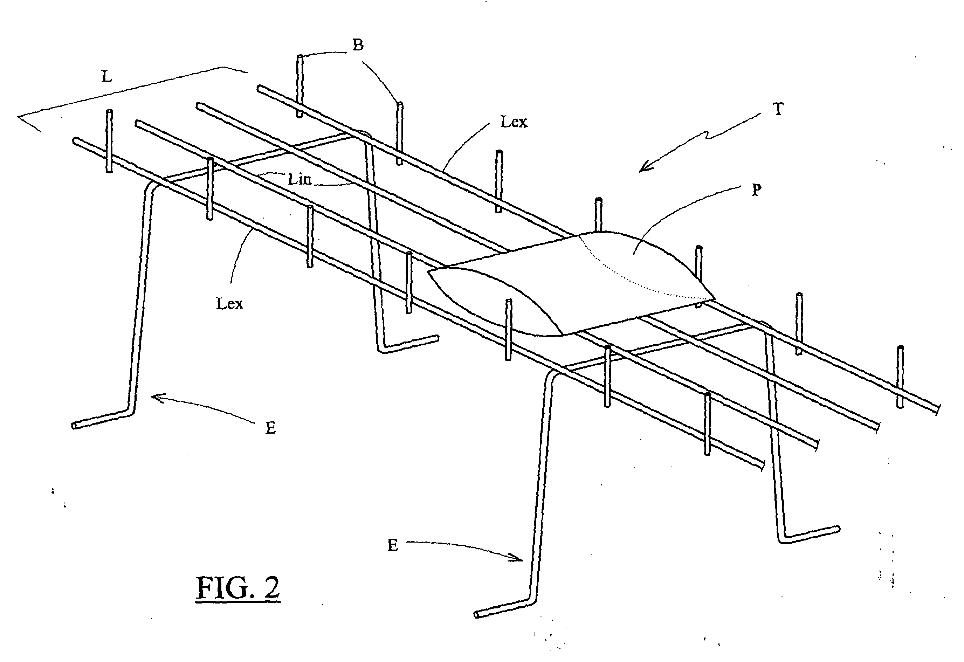

A la Fig. 2, la table d'élevage T se compose de piètements E réunis par des longerons L. Deux piétements E sont visibles à cette Fig. 2. Chaque piètement E présente une forme en oméga. Quatre longerons L sont disposés parallèlement les uns par rapport aux autres sur la branche intermédiaire des piétements E. On distingue ainsi deux longerons extérieurs Lex et deux longerons intérieurs Lin à cette Fig. 2. Les longerons extérieurs Lex sont pourvus de barrettes B qui sont fixées extérieurement en étant dirigées verticalement vers le haut dans la position de travail de ladite table pour servir de points d'ancrage aux poches. Les longerons intérieurs Lin sont destinés à servir de chemin de roulement à la chenille. La largeur de la chenille 330 est donc supérieure à la distance séparant les deux longerons intérieurs Lin et inférieure à la distance séparant les deux longerons extérieurs Lex.

Dans une variante de réalisation, non représentée, la table est pourvue de deux longerons extérieurs et éventuellement d'au moins un longeron intérieur. La chenille repose alors sur les deux longerons extérieurs et éventuellement, le cas échéant, sur le ou les longerons intérieur(s). La table peut être dépourvue de barrettes pour ne pas gêner le déplacement de la machine.

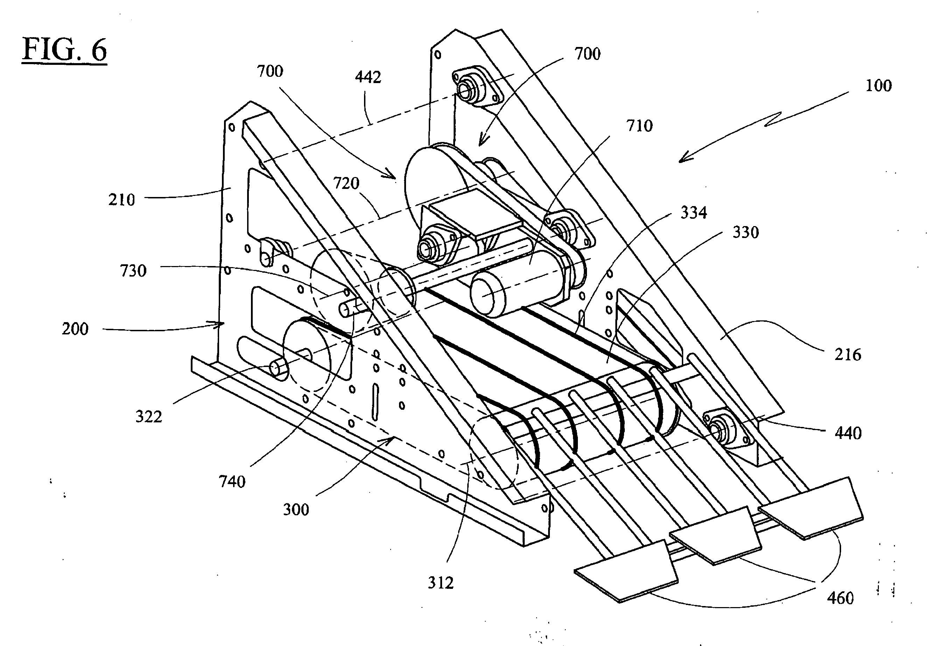

A la Fig. 6, la chenille 330 est pourvue de bourrelets 334 disposés longitudinalement sur sa paroi extérieure. Ils sont adaptés à être guidés par les longerons intérieur(s) et/ou extérieurs d'une table pour éviter une dérive de la machine 100 lors de son déplacement sur ladite table. On dénombre à cette Fig. 6, quatre bourrelets 334.

A la Fig. 3, l'un des rouleaux et ici le rouleau 310 est relié par l'intermédiaire de son arbre 312 à un système d'entraînement 700, décrit plus précisément ci-après, pour permettre l'entraînement à rotation en boucle de la chenille 330 autour du premier rouleau 310 et du second rouleau 320 afin que la machine 100 puisse se déplacer sur la table T.

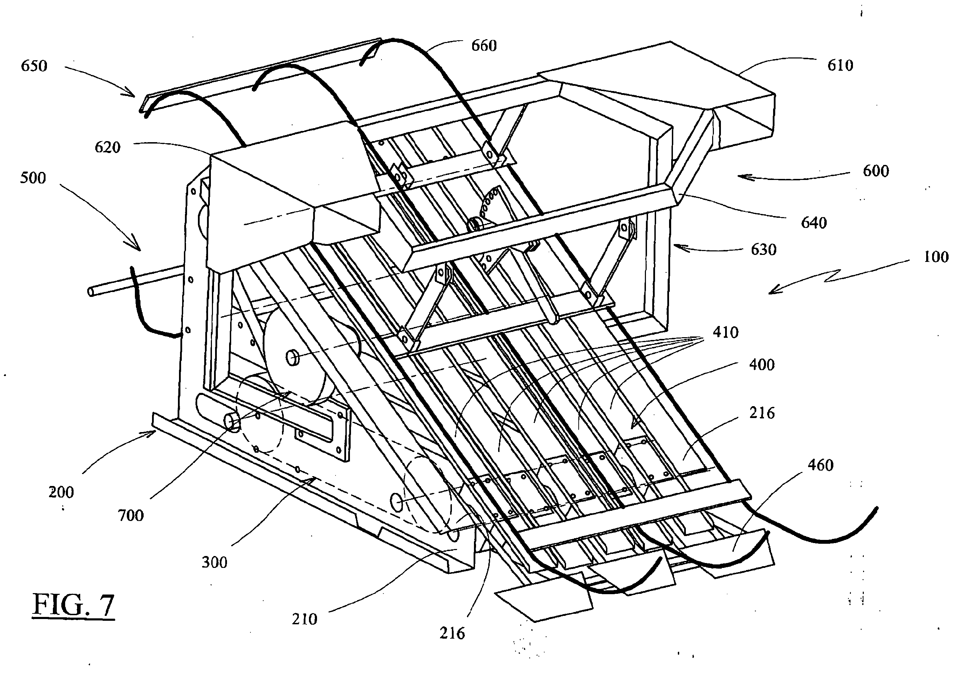

A la Fig. 7, l'ascenseur 400 se compose d'au moins un jeu de rampes 410 mobiles disposées parallèlement aux bords inclinés 216 des flasques 210 et qui sont susceptibles d'être entrainées par le système d'entraînement 700 apte à déplacer en direction du dispositif de retournement 500 chacune des poches que la machine rencontre pendant sont déplacement sur une table. Les rampes 410 font saillie au-dessus des bords inclinés 216 des flasques 210 du châssis 200. On dénombre cinq rampes 410 à cette Fig. 7.

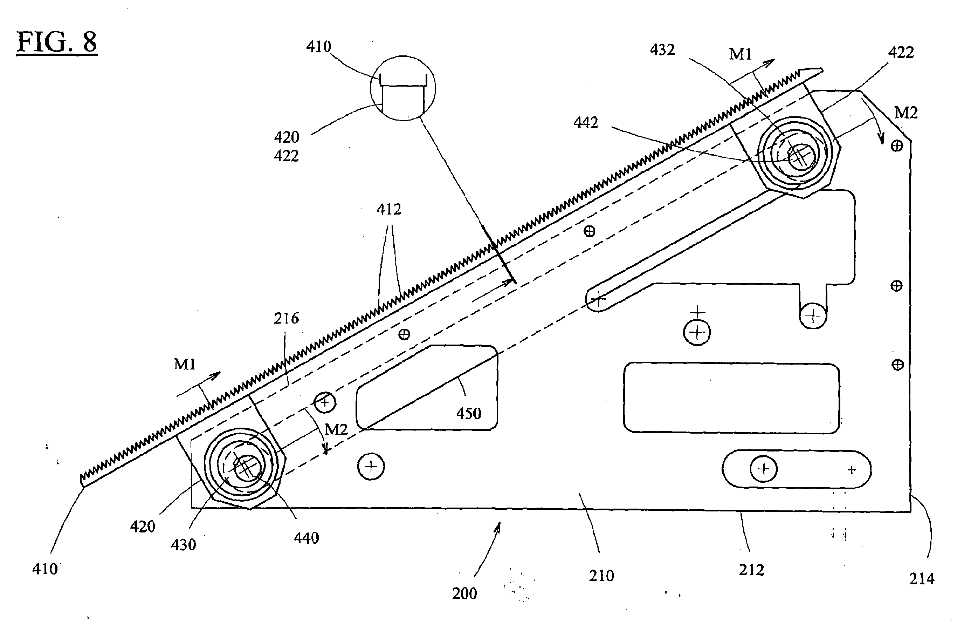

A la Fig. 8, chaque rampe 410 est constituée d'un profilé de section en "U" dont les branches libres sont pourvues de crantages 412, et en particulier de crantages en dents de scie. Les crantages 412 sont destinés à permettre l'accrochage de la rampe 410 sur les parois des poches à huîtres.

A la Fig. 8, un palier 420, 422 est monté sous chacune des deux extrémités de la rampe 410 et à l'intérieur duquel est susceptible de tourillonner un excentrique 430, 432 monté sur un arbre 440, 442 rotatif qui est tenu par ses extrémités et par l'intermédiaire de boîtes à roulement fixées sur les deux flasques 210 du châssis. Pour des raisons de clarté, seule une rampe 410 pourvue de ses deux paliers 420 et 422 est représentée à cette Fig. 8.

L'un des arbres et en l'occurrence l'arbre 440 est entrainé à rotation par l'intermédiaire d'un système d'entraînement, non représenté, et décrit plus précisément ci-après, pour permettre l'entraînement des rampes 410.

Pour cela, les deux arbres 440 et 442 sont reliés par l'intermédiaire d'une transmission 450 pour synchroniser leur mouvement de rotation de telle manière que la rampe 410 puisse se déplacer suivant un mouvement de type oscillant rotatif, matérialisé par les flèches M1 et M2 à cette Fig. 8, et dans lequel l'inclinaison de la rampe 410 demeure constante. Cette transmission 450 est, à cette Fig. 8, une transmission positive de type à pignons et courroie crantés.

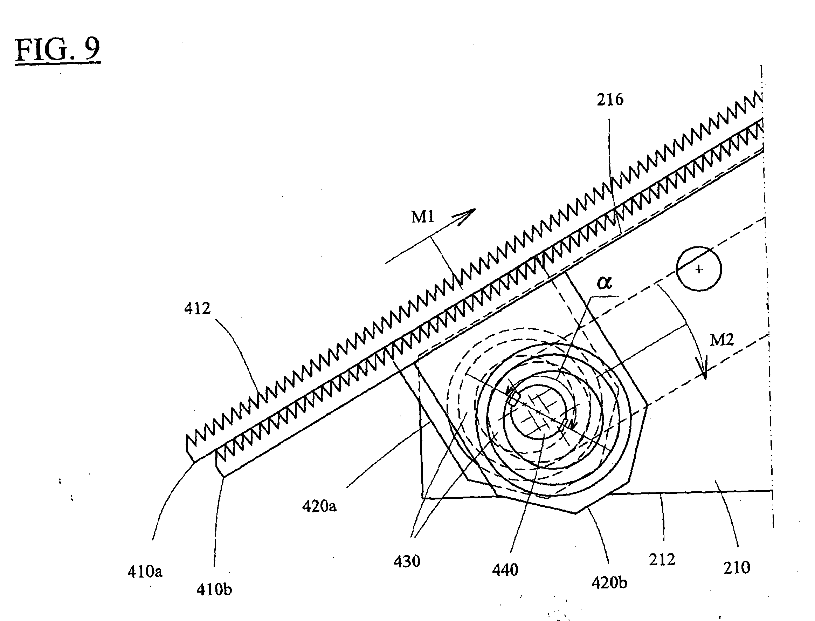

A la Fig. 9, au moins deux paliers 420a et 420b sont montés sur chacun des arbres avec leur rampes respectives 410a et 410b et dont les excentriques 430 sont décalés d'un angle α d'une valeur égale 180 ° par rapport à l'axe de l'arbre 440. Un seul arbre 440 est visible à cette Fig. 9.

L'entraînement à rotation de l'arbre 440 provoque ainsi un mouvement des rampes 410a, 410b correspondantes où elles apparaissent alternativement l'une au-dessus de l'autre de sorte que la rampe supérieure et ici la rampe 410a se déplace suivant un mouvement montant, indiqué par la flèche M1 pour accrocher, par ses crantages 412, la paroi d'une poche afin de pouvoir la monter le long des bords inclinés 216 des flasques 210 du châssis de la machine. Pendant ce temps, la rampe inférieure 410b se déplace dans un mouvement inverse sous la rampe supérieure 410a. Par ailleurs, le mouvement alternatif des rampes provoque des secousses dans les poches, ce qui permet de les débarrasser des résidus qu'elles peuvent contenir et de décoller, le cas échéant, les huîtres entre elles. Ce nettoyage est favorable à une meilleure croissance des huîtres.

Aux Fig. 1 et 3, des palettes 460 de soulèvement des poches P sont fixées entre les flasques 210 en étant placées dans le prolongement des parties basses des rampes 410 de sorte qu'elles puissent être positionnées entre les longerons L de manière à pouvoir soulever une à une les poches P pendant l'avancement de la machine 100 sur la table T afin que chacune des poches puisse être entrainée par les rampes 410 de l'ascenseur 400. Les palettes 460 sont constituées aux Figs. 1 et 6 de plaques présentant une forme trapézoïdale pour contourner les longerons.

A la Fig. 3, le système d'entraînement 700 du train roulant 300 et de l'ascenseur 400 comprend de préférence un seul moteur 710 ainsi qu'une pluralité d'arbres intermédiaires 720, 730 et 740 susceptibles de transmettre la puissance du moteur 710 à l'arbre 312 d'entraînement des rouleaux 310 et 320 du train roulant 300 ainsi qu'à l'arbre 442 d'entraînement des rampes 410 de l'ascenseur 400.

On distingue ainsi un premier arbre intermédiaire 720 qui reçoit la puissance du moteur 710 et qui la retransmet à l'arbre 312 d'entraînement du train roulant 300 par l'intermédiaire d'une première et d'une seconde transmission positive, par exemple de type par poulies et courroie crantées.

Cet arbre intermédiaire 720 transmet également la puissance du moteur à un second arbre intermédiaire 730 qui la retransmet à un troisième arbre intermédiaire 740. Celui-ci transmet à son tour la puissance qu'il reçoit à l'arbre 442 d'entraînement de l'ascenseur 400. Là encore des transmissions positives de type par poulies et courroie crantées sont mises en oeuvre entre le premier arbre 720 et le second arbre 730, le second arbre 730 et le troisième arbre 740 et enfin entre le troisième arbre 740 et l'arbre 442 d'entraînement de l'ascenseur 400.

Le rapport de transmission de ces différentes transmissions est tel qu'une poche est remise retournée sur la table approximativement à l'emplacement où elle a été prélevée.

Pour des raisons de clarté, une seule transmission par poulies et courroie apparaît en traits interrompus entre le moteur 710 et l'arbre intermédiaire 720. Les différentes transmissions sont cependant matérialisées par des flèches à cette Fig. 3.

Le moteur 710 d'entraînement est de préférence un moteur de type hydraulique susceptible d'être alimenté par la pompe hydraulique d'un engin, typiquement un tracteur agricole, se déplaçant à côté de la machine et à la même vitesse qu'elle. Des flexibles hydrauliques, non représentés, relient alors la machine à l'engin.

A la Fig. 3, le dispositif de retournement 500 qui est présenté est destiné à réceptionner une à une les poches chargées par l'ascenseur 400 pour les déposer sur la table T, à l'arrière de la machine 100, en les retournant, et approximativement à l'endroit où elles ont été prélevées.

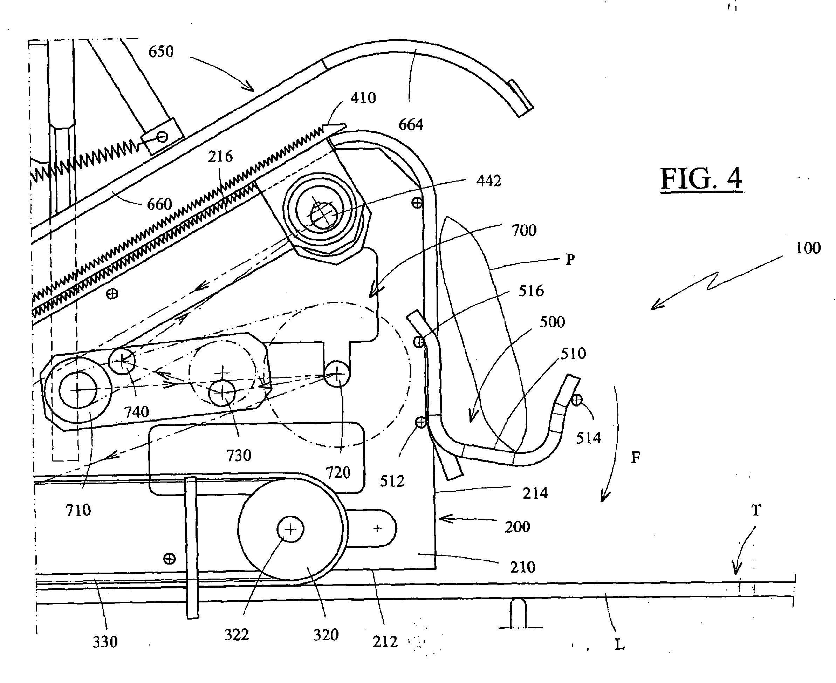

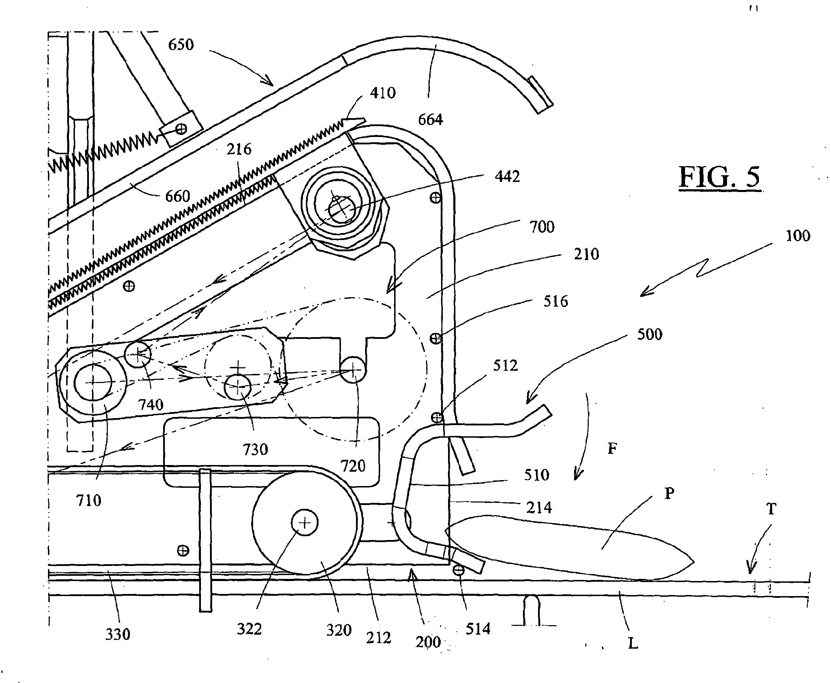

Le dispositif de retournement 500 est constitué aux Figs. 4 et 5 d'un berceau 510 monté de manière articulée, par l'intermédiaire d'une articulation 512 tenue par des boîtes à roulement, non représentés, fixées entre les deux flasques 210, au niveau des bords arrière 214.

Le berceau 510 cst ainsi constitué d'une pluralité de tubes pliés disposés parallèlement les uns par rapport aux autres et qui présentent une forme en "U". Les branches libres des tubes situées d'un même côté sont fixées, au niveau de leur partie inférieure, sur l'articulation 512. Les autres branches libres des tubes sont réunies par un tube 514 de rigidification.

Le berceau 510 est ainsi mobile autour de l'articulation 512 entre une position de réception d'une poche par un de ses côtés longitudinaux, visible à la Fig. 4, et une position de déversement de la poche, sous l'effet de sa masse, visible à la Fig. 5 suivant une trajectoire indiquée par la flèche F. Un moyen de rappel tel qu'un ressort, non représenté, permet de rappeler le berceau dans sa position de réception lorsqu'il ne contient plus de poche. Une butée 516, constituée d'une barre réunie aux deux flasques 210, limite le mouvement du berceau 510 dans sa position de réception.

Aux Figs. 1 et 3, le moyen de levage 600 est fixé sur la machine 100 pour en permettre sa manutention et en particulier pour la placer sur une table T ou pour l'y en retirer. Il est constitué à cette Fig. de deux manchons 610 et 620 montés sur un cadre 630 fixé sur les flasques 210. Les manchons 610 et 620 sont aptes à pouvoir réceptionner des doigts d'un dispositif de manutention, tels que ceux d'une fourche hydraulique attelée à un tracteur agricole ou tout autre engin adapté à cet usage.

Aux Figs. 1 et 3, un moyen de guidage 650 est installé sur la machine 100 en vis-à-vis de l'ascenseur 400 pour guider chaque poche pendant son transfert par l'ascenseur 400.

Le moyen de guidage 650 est constitué d'une pluralité de glissières 660 associées parallèlement les unes par rapport aux autres en étant disposées au-dessus des rampes 410 de l'ascenseur 400 et parallèlement à celles-ci. Les glissières 660 sont montées sur une traverse 640 reliant les manchons 610 et 620 par l'intermédiaire d'une liaison de type à parallélogramme déformable 670 apte à écarter plus ou moins les glissières 660 des rampes 410 afin que lesdites glissières puissent appuyer sur les poches P pendant leur transfert sur les rampes 410.

Un tendeur 680 est monté sur la traverse 640 pour modifier l'effort appliqué par les glissières 660 sur les poches P.

Le tendeur 680 est constitué à la Fig. 3 d'un moyen de rappel tel qu'un ressort et d'un moyen de réglage de sa tension tel qu'une crémaillère.

Les glissières 660 sont prolongées en partie basse et en partie haute par respectivement des portions courbes 662 et 664 pour, d'une part, accompagner les poches P pendant leur chargement sur l'ascenseur 400 depuis la table T et, d'autre part, accompagner les poches P pendant leur basculement hors de l'ascenseur 400 pendant leur transfert dans le dispositif de retournement 500.

Le fonctionnement de la machine 100 est mis en oeuvre de la manière suivante.

On place la machine 100 sur une table d'élevage T supportant des poches à huîtres P que l'on souhaite retourner. On met en fonctionnement le moteur 710 si bien que la machine se déplace sur les longerons intérieur(s) Lin et/ou extérieurs en roulant sur sa chenille 330 et que les rampes 410 sont mises en fonctionnement. Lorsque la machine 100 rencontre une poche P, les palettes 460 la soulève si bien qu'elle peut être entrainée par les rampes 410 suivant une trajectoire montante en étant guidée par les glissières 660. Parvenue au sommet de la machine, la poche P bascule et tombe dans le dispositif de retournement 500 en étant guidée par les parties courbes 664 desdites glissières. Sous l'effet de la masse de la poche P, le berceau 510 bascule et déverse la poche en la retournant sur la table T. La poche est replacée, retournée, approximativement à l'emplacement où elle reposait avant le passage de la machine.

La machine à retourner les poches à huîtres de l'invention est ainsi capable d'effectuer un travail jusqu'alors réalisé manuellement dans des conditions pénibles.

Pendant leur transport sur l'ascenseur, les poches sont purgées des résidus qu'elles contiennent et les agglomérats d'huîtres sont désagrégés.

## Revendications

1. Machine (100) destinée à retourner des poches (P) à huîtres préalablement posées sur une table (T) d'élevage, la machine (100) comprenant un train roulant (300) apte à faire circuler la machine (100) sur la table (T), **caractérisée en ce que** la machine (100) est pourvue d'un ascenseur (400) et d'un dispositif de retournement (500), l'ascenseur (400) étant adapté pour soulever les poches (P) de la table (T) pendant l'avancement de la machine (100) pour les transporter une à une dans le dispositif de retournement (500), le dispositif de retournement (500) étant mobile entre une position de réception d'une poche (P) et une position de déversement de la poche (P) sur la table (T), dans une position retournée, à l'arrière de la machine (100).

2. Machine (100) selon la revendication 1, **caractérisée en ce que** l'ascenseur (400) comprend des rampes (410) mobiles suivant un mouvement de type oscillant rotatif (M1, M2) et dans lequel l'inclinaison de chaque rampe (410) demeure constante.

3. Machine (100) selon la revendication 2, **caractérisée en ce que** chaque rampe (410) est constituée d'un profilé de section en "U" dont les branches libres sont pourvues de crantages (412).

4. Machine (100) selon la revendication 2 ou 3, **caractérisée en ce qu'**elle comprend une paire de flasques (210), les deux extrémités de chaque rampe (410) étant fixées respectivement sur deux paliers (420, 422), un excentrique (430, 432) tourillonnant à l'intérieur de chaque palier (420, 422), chaque excentrique (430, 432) étant monté sur un arbre (440, 442) rotatif tenu entre les deux flasques (210).

5. Machine (100) selon la revendication 4, **caractérisée en ce que** les excentriques (430, 432) de deux rampes (410a, 410b) voisines sont décalés d'un angle (α) d'une valeur égale à 180 ° par rapport à l'axe de l'arbre rotatif (440, 442).

6. Machine (100) selon la revendication 4 ou 5, **caractérisé en ce que** le mouvement de rotation des deux arbres (440, 442) est synchronisé par l'intermédiaire d'une transmission (450).

7. Machine (100) selon l'une quelconque des revendications précédentes, **caractérisée en ce que** le train roulant (300) se compose d'un premier rouleau (310), d'un second rouleau (320) autour desquels est montée une chenille (330) apte à rouler sur la table (T).

8. Machine (100) selon la revendication 7, **caractérisée en ce que** les deux rouleaux (310, 320) sont respectivement montés sur des arbres rotatifs (312, 322) dont les extrémités sont tenues entre les deux flasques (210).

9. Machine (100) selon la revendication 8, **caractérisée en ce qu'**un arbre rotatif (312) d'entraînement d'un rouleau (310) du train roulant (300) ainsi qu'un arbre rotatif (442) d'entraînement des rampes (410) de l'ascenseur (400) sont reliés à un système d'entraînement (700).

10. Machine (100) selon la revendication 9, **caractérisée en ce que** le système d'entraînement (700) comprend un moteur (710) ainsi qu'une pluralité d'arbres intermédiaires (720, 730 et 740) susceptibles de transmettre la puissance du moteur (710) à l'arbre rotatif (312) d'entraînement dudit rouleau (310) ainsi qu'à l'arbre rotatif (442) d'entraînement des rampes (410).

11. Machine (100) selon la revendication 10, **caractérisée en ce que** la transmission de puissance entre le moteur (710) et les différents arbres intermédiaires (720, 730 et 740) ainsi qu'entre ces arbres intermédiaires (720, 730 et 740) et les arbres d'entrainement (312, 442) est mise en oeuvre par des transmissions positives de type à poulies et courroie crantées.

12. Machine (100) selon la revendication 10 ou 11, **caractérisée en ce que** le moteur (710) est de type hydraulique susceptible d'être alimenté par la pompe hydraulique d'un engin se déplaçant à côté de la machine.

13. Machine (100) selon l'une quelconque des revendications 4 à 12, **caractérisée en ce que** le dispositif de retournement (500) est constitué d'un berceau (510) monté de manière articulée, par l'intermédiaire d'une articulation (512) tenue entre les deux flasques (210).

14. Machine (100) selon la revendication 13, **caractérisée en ce que** le berceau (510) est constitué d'une pluralité de tubes pliés présentant une forme en "U", les branches libres des tubes situées d'un même côté sont fixées, au niveau de leur partie inférieure, à l'articulation (512).

15. Machine (100) selon l'une quelconque des revendications précédentes, **caractérisée en ce qu'**elle est pourvue d'un moyen de levage (600) pour en permettre sa manutention.

16. Machine (100) selon la revendication 15, **caractérisée en ce que** le moyen de levage (600) est constitué de deux manchons (610, 620) montés sur un cadre (630) fixé sur les flasques (210), les manchons (610, 620) étant aptes à pouvoir réceptionner des doigts d'un dispositif de manutention.

17. Machine (100) selon l'une quelconque des revendications précédentes, **caractérisée en ce qu'**elle est pourvue d'un moyen de guidage (650) positionné en vis-à-vis de l'ascenseur (400) pour guider chaque poche (P) pendant son transfert sur ledit ascenseur (400).

18. Machine (100) selon la revendication 16, **caractérisée en ce que** le moyen de guidage (650) est constitué d'une pluralité de glissières (660) associées parallèlement les unes par rapport aux autres en étant disposées au-dessus des rampes (410) et parallèlement à celles-ci, les glissières (660) étant montées sur une traverse (640) reliant les manchons (610, 620) par l'intermédiaire d'une liaison de type à parallélogramme déformable (670) apte à écarter plus ou moins les glissières (660) des rampes (410) afin que lesdites glissières puissent appuyer sur les poches (P) pendant leur transfert sur lesdites rampes.

19. Machine (100) selon la revendication 18, **caractérisée en ce que** qu'elle est pourvue d'un tendeur (680) adapté à modifier l'effort appliqué par les glissières (660) sur les poches (P).

20. Machine (100) selon l'une quelconque des revendications 7 à 19, **caractérisée en ce qu'**elle coopère avec une table (T), la table se compose de piétements (E) réunis par deux longerons extérieurs (Lex) et éventuellement d'au moins un longeron intérieur (Lin), la largeur de la chenille (330) étant adaptée pour prendre appui sur au moins deux longerons voisins (Lex, Lin) de la table (T).

21. Machine (100) selon la revendication 20, **caractérisée en ce que** des palettes (460) de soulèvement des poches (P) sont fixées entre les flasques (210) en étant placées dans le prolongement des parties basses des rampes (410) afin de pouvoir être positionnées entre les longerons (L).

22. Machine (100) selon la revendication 20 ou 21, **caractérisée en ce que** la chenille (330) est pourvue de bourrelets (334) disposés longitudinalement sur sa paroi extérieure de manière à pouvoir être guidés par au moins deux longerons voisins (Lex, Lin) de la table (T).
